# EUROPÄISCHE PATENTSCHRIFT

(11) **EP 0 641 847 B1**
(45) Veröffentlichungstag und Bekanntmachung des Hinweises auf die Patenterteilung: **02.06.1999**
(21) Anmeldenummer: 94113094.0
(22) Anmeldetag: 23.08.1994
(51) Int. Cl.: C09J 7/04

(54) **Verwendung eines Papierträgers**
Utilization of a paper support
Utilisation d'un support en papier

(30) Priorität: 08.09.1993 DE 4330362
(43) Veröffentlichungstag der Anmeldung: 08.03.1995
(73) Patentinhaber: Beiersdorf Aktiengesellschaft, 20245 Hamburg (DE)
(72) Erfinder: Spies, Manfred, Dr., D-35216 Biedenkopf (DE); Knolle, Herbert, Dr., D-21465 Reinbek (DE); Westphal, Andreas, D-22049 Hamburg (DE); Gleichenhagen, Peter, Dr., D-22417 Hamburg (DE); Meyer, Robert, D-22529 Hamburg (DE)

(56) Entgegenhaltungen:
- DE-A- 2 845 541

## Beschreibung

Die Erfindung betrifft die Verwendung eines Papierträgers zur Herstellung eines repulpierbaren Verpackungs-Klebebandes (carton sealing tape).

Verpackungsklebebänder sind seit langem bekannt und werden in großem Umfang eingesetzt. Da aber die Anforderungen an Verpackungen auf Basis Papier/Pappe vermehrt dahin gehen, repulpierbar zu sein und also die großtechnischen Herstellungsprozesse über eine Verunreinigung der aufbereiteten Pulpe nicht zu stören, gilt diese Anforderung nun auch den auf solchen Materialien verwendeten Verpackungsklebebändern.

Repulpierbare Selbstklebemassen sind bereits bekannt, so durch DE-A 23 60 441, DE-C 31 05 894 und DE-A 33 18 600. Solche und ähnliche Selbstklebemassen sind für den oben genannten Zweck durchaus geeignet.

Schwierigkeiten allerdings macht die Rückseitenbeschichtung solcher Klebebänder. Damit ein derartiges Klebeband zur Rolle gewickelt nicht auf sich selbst verklebt ist es üblich, die Rückseite mit einem Release auszurüsten, insbesondere mit Verbindungen auf Silikon-Basis. Diese aber stören in der aufbereiteten Pulpe, die Papierfabriken haben Probleme mit solchen Rohstoffen.

Andererseits zeigt sich, daß bekannte und handelsübliche silikonfreie Release-Systeme nicht die gewünschten Ergebnisse zeigen und vor allem hinsichtlich ihrer Release-Wirkung in Kombination mit hochpolaren wasserlöslichen Klebemassen unzureichend sind, so daß es zu irreversiblen Verklebungen der Klebeband-Rollen kommt, zu Abreißern beim Abziehen von der Rolle und auch zu nicht akzeptabel hohen Abziehkräften, die nötig sind, um ein solches Klebeband von der Rolle abzuziehen.

Aus dem deutschen Gebrauchsmuster G 92 04 740 (analog DE 42 11 510 A1) war auch bereits ein recycling-fähiges und bedruckbares Verpackungsklebebandpapier bekannt, das mit einem Releasesystem versehen ist und mit einem Vorstrich ausgerüstet werden kann. Die als Release eingesetzten Acrylatdispersionen mögen dabei für ein Recycling ausreichen, sind aber in Kombination mit wasserlöslichen Klebemassen nicht funktionstüchtig und insbesondere nicht für ein Repulpieren geeignet.

Aufgabe der Erfindung war es, hier Abhilfe zu schaffen, insbesondere ein repulpierbares Verpackungsklebeband zu schaffen, das die Nachteile des Standes der Technik nicht oder zumindest nicht in diesem Ausmaß aufweist, und das sich dennoch problemlos repulpieren läßt.

Gelöst wird diese Aufgabe durch die Verwendung eines Papierträgers, der wie in den Patentansprüchen angegeben, ausgerüstet ist.

### Trägermaterialien (Papiere)

Als Trägermaterialien kommen in wesentlichen hochgeleimte Papiere in Betracht, die nach dem Clupak Verfahren hergestellt werden können, und die voll repulpierbar sind. In Abhängigkeit der Anwendung können Papiere mit unterschiedlichem Flächengewicht eingesetzt werden. Für Verpackungsbänder werden Flächengewichte in einem Bereich zwischen 50 und 100 g/m² bevorzugt. Aufgrund der Tatsache, daß bei einer Anwendung als Verpackungsband auf das Trägermaterial bestimmte Zugkräfte ausgeübt werden, muß sichergestellt sein, daß entsprechende Festigkeiten in Längs- und Querrichtung gegeben sind. Die Kreppung des Trägermaterials und die damit verbundene Dehnung ist bei der Herstellung variabel.

Die bevorzugt eingesetzten, nach dem Clupak-Verfahren hergestellten hochgeleimten Papiere, entsprechen voll den gewünschten Anforderungen. In Abhängigkeit der gewünschten Anwendung können sowohl Papiere mit höherer Längs-Dehnbarkeit als Quer-Dehnbarkeit eingesetzt werden, als auch Papiere mit höherer Quer-Dehnbarkeit als Längs-Dehnbarkeit, sowohl in gebleichter als auch in der umweltfreundlichen ungebleichten Version.

### Klebemassen

Als Klebemassen können übliche repulpierbare Systeme verwendet werden, wie in der Patentliteratur beschrieben (vgl. z.B. DE 23 60 441 A1, DE 31 05 894 C2, DE 33 18 600 A1). Diese Klebemassen bestehen insbesondere aus bestimmten Gerüstpolymeren, basierend auf Acrylsäure und anderen Comonomeren, und aus einem zum Teil erheblichen Anteil an Weichmachern bzw. Harzen. Der Weichmacher- bzw. Harzzusatz führt dazu, daß die häufig nicht oder nur schwachklebende Gerüstpolymeren adhäsive Eigenschaften erlangen. Erfolgt bei der Herstellung von Rollenware ein Kontakt zwischen der Klebmasse und der Trägerrückseite, so führt dieser Kontakt ohne Verwendung eines Releasesystems zu einem unerwünschten Verkleben.

Für repulpierbare Selbstklebemassen, die meist polarer Natur sind, werden üblicherweise silikonhaltige Systeme als Trennmittel verwendet. Die bekannten silikonfreien Trennmittel versagen häufig in Verbindung mit polaren wasserlöslichen Klebemassen. Die vorliegende Erfindung schließt diese Lücke. In vielen Anwendungsfällen für Haftklebebänder ist eine definierte Restadhäsion zwischen der Klebemasse und dem Releasesystem erwünscht. Durch Variation der Weichmachersysteme und der Verhältnisse der Releasebestandteile lassen sich die Abrollkräfte definiert einstellen.

### Releasesysteme

Aufgrund der Tatsache, daß die Wechselwirkung zwischen der Klebemasse und der Rückseite des Klebebandes zu groß ist, muß das Trägermaterial rückseitig mit einem Releasesystem ausgestattet werden. Die Anforderungen an ein derartiges Releasesystem sind vielseitig. Neben der Trennwirkung muß eine gute Repulpierbarkeit gegeben sein, so daß sich das Klebeband problemlos wieder aufbereiten läßt. Die Bedruckbarkeit stellt bei bestimmten Anwendungen ebenfalls eine nicht zu vernachlässigende Anforderung dar, die von silikonhaltigen Systemen nicht ausreichend erfüllt wird.

Setzt man gemäß DE 28 45 541 Copolymere aus Amid/Styrol, insbesondere Maleinsäure-mono-(N-stearyl)-amid und Styrol im Gemisch mit Filmbildnern, insbesondere Polyvinylalkoholen mit unterschiedlichem Molekulargewicht und Verseifungsgrad ein, so erhält man Trennsysteme, die in Kombination mit üblichen wasserlöslichen Klebemassen mit polarem Charakter sich als voll funktionstüchtig erweisen und die des weiteren hervorragend bedruckbar und repulpierbar sind. Der Polyvinylalkohol dient hierbei als Filmbildner und verhindert des weiteren ein zu starkes Eindringen des Releasesystems in das häufig saugfähige Trägermaterial.

Als Filmbildner können Polyvinylalkohole mit einem Molekulargewicht von etwa 1000 bis 400.000, bevorzugt 2000 bis 150.000 eingesetzt werden. Releasesysteme mit Polyvinylalkoholen niedrigen Molekulargewichtes neigen stärker zu einem Eindringen in ein saugfähiges Trägermaterial als höhermolekulare Varianten. Mischungen von Polyvinylalkoholen unterschiedlichen Molekulargewichtes können ebenfalls erfolgreich eingesetzt werden. Der Verseifungsgrad der verwendeten Polyvinylalkohole ist variabel.

In Abhängigkeit von der verwendeten Klebemasse kann der Gehalt an Polyvinylalkohol bei Kombinationen mit den genannten Copolymeren, insbesondere denen aus Maleinsäuremono-(N-stearyl)-amid und Styrol in einem Bereich zwischen 5 und 95 % bezogen auf den Feststoffgehalt variieren, bevorzugt zwischen 25 und 65 %.

Der Masseauftrag des Releasesystems liegt insbesondere in einem Bereich zwischen 0,5 und 15 g, bevorzugt in einem Bereich zwischen 2 g und 6 g.

Im folgenden soll die Erfindung anhand von Ausführungsbeispielen erläutert werden, ohne diese aber dadurch unnötig einschränken zu wollen.

### Beispiel 1

### Lackierung

In einem 20 1 fassenden Gefäß werden 6,5 kg einer 30%igen wässrigen Dispersion eines Copolymeren aus Maleinsäuremono-(N-stearyl)-amid und Styrol gemäß DE 28 45 541 und 3,5 kg einer 30%igen wäßrigen Lösung aus Polyviol V03.140 (Polyvinylalkohol der Firma Wacker, Pn ≃ 300) sorgfältig homogenisiert. Die so erhaltene silikonfreie voll repulpierbare Trennschicht wird im Vollstrich kontinuierlich mit einer Schichtdicke von etwa 3 - 5 g / m² auf einen hochgeleimten nach dem Clupak-Verfahren hergestellen Papierträger (Wisaforest, ungebleicht, Trägergewicht 65 g / m²) aufgetragen.

Um einer Verwellung des Trägermaterials entgegenzuwirken, wird die nichtlackierte Seite vor der Beschichtung mit Wasser durch mehrere nebeneinander liegende Düsen (etwa 0,5 1 / h, bezogen auf eine Düse) befeuchtet.

### Technische Bedingungen:

| | |
|---|---|
| Maschinendaten | Kanalbeschichtungsmaschine mit Gummituchrakel |
| Rakelmesser | 4 mm |
| Trägerbahngeschwindigkeit | 50 m /min. |

Das mit dem Trennlack beschichtete Trägermaterial wird anschließend thermisch in 10 unterschiedlichen Trockenkanälen getrocknet.

(Trockentemperatur: 2 x 100°C, 2 x 120°C, 2 x 140°C, 4 x 160°C).

### Nachstich:

Das lackierte Trägermaterial wird in einem zweiten Arbeitsgang auf der nicht lackierten Seite mit einer üblichen repulpierbaren Selbstklebemasse beschichtet, wie z.B. in DE 23 60 441, DE 33 18 600 oder DE 31 05 894 beschrieben. Hierzu werden in einem 20 1 fassenden Gefäß 5,99 kg eines 30%igen radikalisch polymerisierten Gerüstpolymeren aus 47% Acrylsäure, 48% Butylacrylat und 5% Vinylcaprolactam in Benzin/Aceton mit 3,97 kg Ethomeen C-25 (Akzo) und 0,029 kg Aluminiumchelat abgemischt. Die so hergestellte Haftklebemasse wird als 30%ige Lösung in Benzin/Aceton mit einer Schichtdicke von etwa 40 - 50 g/m² auf die nichtlackierte Seite des Trägermaterials aufgetragen.

### Technische Bedingungen:

| | |
|---|---|
| Maschinendaten | Hängebeschichtungsanlage |
| Streicheinstellung | 183 Skt. |
| Trägerbahngeschwindigkeit | 50 m / min. |

Die Klebmasse wird anschließend thermisch in 4 unterschiedlichen Trockenkanälen getrocknet und vernetzt.

(Trockentemperatur: Vorkanal 50°C, Zone 1 70°C, Zone 2 80°C, Zone 3 90°C, Zone 4 90°C.

Man erhält so ein Produkt, das sich in einer für ein Verpackungsband gewünschten Art und Weise einwandrei zur Rolle wickeln und auch von dieser wieder abrollen läßt.

Das erhaltene Produkt erweist sich nach der Prüfmethode Tappi UM 213 A als voll repulpierbar.

### Beispiel 2

### Lackierung:

In einem 20 1 fassenden Gefäß werden 7,5 kg einer 30%igen wäßrigen Dispersion eins Copolymeren aus Maleinsäure-mono-(N-stearyl)-amid und Styrol gemäß DE 28 45 541 und 3,75 kg einer 20%igen wäßrigen Lösung aus Mowiol 18 - 88 (Polyvinylalkohol der Firma Hoechst, Pn ≈ 2700) sorgfältig gemischt. Die so erhaltene silikonfreie voll repulpierbare Trennschicht wird im Vollstrich kontinuierlich mit einer Schichtdicke von etwa 4 g / m² auf einen hochgeleimten nach dem Clupak-Verfahren hergestellten Papierträger (Wisaforest, gebleicht, Trägergewicht 85 g / m²) aufgetragen.

Um einer Verwellung des Trägermaterials entgegenzuwirken, wird die nichtlackierte Seite von der Beschichtung mit Wasser durch mehrere nebeneinander liegende Düsen (etwa 0,5 l/h, bezogen auf eine Düse), befeuchtet.

### Technische Bedingungen:

| | |
|---|---|
| Maschinendaten | Zylinderbeschichtungsmaschine |
| Rakelmesser | 3 mm |
| Trägerbahngeschwindigkeit | 25 m/min. |

Das mit dem Trennlack beschichtete Trägermaterial wird mittels eines auf 100°C temperierten Zylinders (Durchmesser 2,5 m) getrocknet.

### Nachstrich:

Das Trägermaterial wird in einem zweiten Arbeitsgang auf der nicht lackierten Seite mit einer repulpierbaren Selbstklebemasse beschichtet. Hierzu werden in einem 20 l fassenden Gefäß 5,99 kg eines 30%igen radikalisch polymerisierten Gerüstpolymeren aus 47% Acrylsäure, 48% Butylacrylat und 5 % Vinylcaprolactam in Benzin/Aceton mit 3,97 kg Ethomeen C-25 (Akzo) und 0,029 kg Aluminiumchelat abgemischt. Die so hergestellte Haftklebemasse wird als 35%ige Lösung in Benzin/Aceton mit einer Schichtdicke von etwa 40 g/m² auf die nichtlackierte Seite des Trägermaterials aufgetragen.

### Technische Bedingungen:

| | |
|---|---|
| Maschinendaten | Hängebeschichtungsanlage |
| Streicheinstellung | 183 Skt |
| Trägerbahngeschwindigkeit | 40 m / min. |

Die Klebemasse wird anschließend thermisch in 4 unterschiedlichen Trockenkanälen getrocknet und vernetzt.

Trockentemperaturen: Vorkanal 50°C, Zone 1 70°C, Zone 2 80°C, Zone 3 90°C, Zone 4 90°C.

## Patentansprüche

1. Verwendung eines Papierträgers zur Herstellung eines repulpierbaren Verpackungsklebebandes (carton sealing tape), das auf der einen Seite mit einer repulpierbaren Selbstklebemasse und auf der anderen Seite mit einem repulpierbaren silikonfreien Release auf Basis eines Copolymeren aus Amid/Styrol zusammen mit einem Polyvinylalkohol-Filmbildner ausgerüstet ist.

2. Verwendung nach Anspruch 1, dadurch gekennzeichnet, daß das Copolymer ein solches vom Typ Maleinsäure-mono-(N-Stearyl)-amid/Styrol ist.

3. Verwendung nach Anspruch 1, dadurch gekennzeichnet, daß der Papierträger eine höhere Quer-Dehnbarkeit als Längs-Dehnbarkeit aufweist.

4. Verwendung nach Anspruch 1, dadurch gekennzeichnet, daß der Papierträger eine höhere Längs-Dehnbarkeit als Quer-Dehnbarkeit aufweist.

5. Verwendung nach Anspruch 1, dadurch gekennzeichnet, daß ein Papierträger aus hochgeleimtem Papier eingesetzt wird.

6. Verwendung nach Anspruch 1, dadurch gekennzeichnet, daß eine repulpierbare Selbstklebemasse vom Typ eines wasserlöslichen Acrylats verwendet wird, insbesondere eine solche mit polarem Charakter.

7. Verwendung nach Anspruch 1, dadurch gekennzeichnet, daß die Release-beschichtete Seite beschrieben und/oder bedruckt werden kann.

8. Repulpierbares Verpackungsklebeband nach Anspruch 1, gekennzeichnet durch einen Papierträger, der auf der einen Seite mit einer repulpierbaren Selbstklebemasse und auf der anderen Seite mit einem repulpierbaren, silikonfreien Release auf Basis eines Copolymeren aus Amid/Styrol zusammen mit einem Polyvinylalkohol-Filmbildner ausgerüstet ist.

## Claims

1. Use of a paper carrier for the production of a repulpable carton sealing tape which is finished on one side with a repulpable self-adhesive composition and on the other side with a repulpable silicone-free release based on a copolymer of amide/styrene together with a polyvinyl alcohol film-forming agent.

2. Use according to Claim 1, characterized in that the copolymer is of the N-stearylmaleamide/styrene type.

3. Use according to Claim 1, characterized in that the paper carrier has a higher transverse extensibility than longitudinal extensibility.

4. Use according to Claim 1, characterized in that the paper carrier has a higher longitudinal extensibility than transverse extensibility.

5. Use according to Claim 1, characterized in that a paper carrier of highly sized paper is employed.

6. Use according to Claim 1, characterized in that a repulpable self-adhesive composition of the type of a water-soluble acrylate is used, in particular one having a polar character.

7. Use according to Claim 1, characterized in that the release-coated side can be written on and/or printed.

8. Repulpable carton sealing tape according to Claim 1, characterized by a paper carrier which is finished on one side with a repulpable self-adhesive composition and on the other side with a repulpable, silicone-free release based on a copolymer of amide/styrene together with a polyvinyl alcohol film-forming agent.

## Revendications

1. Utilisation d'un support en papier en vue de la fabrication d'une bande adhésive d'emballage (en anglais carton sealing tape) pouvant être refondue, qui est pourvu, d'un côté, d'une masse autocollante pouvant être refondue et, de l'autre côté, d'un produit antiadhésion pouvant être refondu, exempt de silicones, à base d'un copolymère en amide/styrène, conjointement à un agent filmogène à l'alcool polyvinylique.

2. Utilisation selon la revendication 1, caractérisée en ce que le copolymère est un copolymère du type amide mono-(N-stéarylique) d'acide maléique/styrène.

3. Utilisation selon la revendication 1, caractérisée en ce que le support en papier présente une capacité d'allongement transversal plus élevée que la capacité d'allongement longitudinal.

4. Utilisation selon la revendication 1, caractérisée en ce que le support en papier présente une capacité d'allongement longitudinal plus élevée que la capacité d'allongement transversal.

5. Utilisation selon la revendication 1, caractérisée en ce que l'on utilise un support en papier fait de papier fortement collé.

6. Utilisation selon la revendication 1, caractérisée en ce que l'on utilise une masse auto-adhésive pouvant être refondue du type acrylate hydrosoluble, en particulier une masse à caractère polaire.

7. Utilisation selon la revendication 1, caractérisée en ce que le côté revêtu de produit antiadhésion peut être muni d'une inscription et/ou d'une impression.

8. Bande adhésive d'emballage pouvant être refondue selon la revendication 1, caractérisée par un support en papier, qui est pourvu, d'un côté, d'une masse auto-adhésive pouvant être refondue et, de l'autre côté, d'un produit antiadhésion pouvant être refondu, exempt de silicones, à base d'un copolymère en amide/styrène, conjointement à un agent filmogène à l'alcool polyvinylique.
